# EUROPÄISCHE PATENTSCHRIFT

(11) **EP 1 788 013 B1**
(45) Veröffentlichungstag und Bekanntmachung des Hinweises auf die Patenterteilung: **23.09.2009**
(21) Anmeldenummer: 06123611.3
(22) Anmeldetag: 07.11.2006
(51) Int. Cl.: C08J 9/00

(54) **Verfahren zur Herstellung von Polyolefin-Schaumpartikeln**
Process for preparation of foamed polyolefin particles
Procédure pour la préparation de particules de mousse de polyolefines

(30) Priorität: 16.11.2005 DE 102005055076
(43) Veröffentlichungstag der Anmeldung: 23.05.2007
(73) Patentinhaber: BASF SE, 67056 Ludwigshafen (DE)
(72) Erfinder: Fink, Günter, 67133, Maxdorf (DE); Mair, Gunther, 68163, Mannheim (DE); Rudloff, Jan, 01127, Dresden (DE); Keppeler, Uwe, 67126, Hochdorf-Assenheim (DE); Andrijanic, Petar, 67071, Ludwigshafen (DE); Braun, Frank, 67063, Ludwigshafen (DE)

(56) Entgegenhaltungen:
- EP-A- 1 544 234
- EP-A1- 1 182 225
- WO-A-20/04005383
- DE-A1- 19 859 418

## Beschreibung

Die Erfindung betrifft ein Verfahren zur Herstellung von Polyolefin-Schaumpartikeln (II) mit einer mittleren Schüttdichte im Bereich von 70 bis 300 g/l und einer gewichtsmittleren Partikelgröße im Bereich von 1 bis 5 mm mit einer Verteilungsbreite bei der 90 % der Partikel eine Abweichung von maximal 20 % und 50 % der Partikel eine Abweichung von maximal 10 % von der gewichtsmittleren Partikelgröße aufweisen, sowie deren Verwendung zur Herstellung niedriger Schüttdichten durch Nachschäumen.

Die EP-A 778 310 beschreibt ein Mehrstufenverfahren zur Herstellung von Polyolefin-Schaumstoffpartikeln, bei dem das Arbeiten in wässriger Suspension vermieden werden kann. Hierbei werden in einer ersten Stufe angeschäumte Partikel mit einer Schüttdichte von 120 bis 400 g/l durch Extrusion von feste Treibmittel enthaltendem Polyolefin hergestellt, die dann in der zweiten Stufe mit Wasserdampf weiter aufgeschäumt werden.

Nach der EP-A 831 115 können Polyolefin-Schaumpartikel mit hoher Schüttdichte durch Imprägnieren von Polyolefin-Granulat mit einem niedrig siedenden Alkohol als Treibmittel in Suspension unter Druck und anschließendem Entspannen erhalten werden.

Für manche Anwendungszwecke, z. B. für konstruktive Formteile im Automobilbau, wo hohe Druckfestigkeiten und Steifigkeiten gefordert werden, sind Polyolefin-Schaumpartikel hoher Dichte erwünscht. Polyolefin-Schaumpartikel hoher Dichte, die sich in üblichen Druckschäumern zu niedrigen Schüttdichten nachschäumen lassen, haben den Vorteil, dass die Transportkosten aufgrund der hohen Dichte der Schaumpartikel gesenkt werden können und die gewünschte niedrige Schüttdichte durch Nachschäumen beim Verarbeiter eingestellt werden kann.

Die EP-A 1 281 729 beschreibt die Herstellung von Polyolefin-Schaumpartikeln mit hoher Schüttdichte, bei dem expandierbare, partikelförmige Polyolefine mit einem Schüttgewicht von mehr als 400 g/l zu Schaumpartikel mit einer Schüttdichte von 200 bis 400 g/l verschäumt werden.

Die durch die Druckimprägnierung erhältlichen Polyolefin-Schaumpartikel weisen in der Regel eine breite Verteilung der Schüttdichte auf. Die Verteilung ist besonders breit, wenn über die Einstellung der Verfahrensparameter gezielt Polyolefin-Schaumpartikel mit hohen mittleren Schüttdichten hergestellt werden sollen. Die breite Verteilung der Schüttdichten kann zu einer teilweisen Fraktionierung bei Transport und Lagerung führen, so dass bei deren Weiterverarbeitung unerwünschte Schwankung in der Dichte der Schaumstoffformteile auftreten.

Aufgabe der vorliegenden Erfindung war es, den genannten Nachteilen abzuhelfen und Polyolefin-Schaumpartikel mit hoher Schüttdichte und enger Partikelgrößenverteilung herzustellen.

Demgemäss wurde ein Verfahren zur Herstellung von Polyolefin-Schaumpartikel (II) mit einer mittleren Schüttdichte im Bereich von 70 bis 300 g/I und einer gewichtsmittleren Partikelgröße im Bereich von 1 bis 5 mm mit einer Verteilungsbreite, bei der 90% der Partikel eine Abweichung von maximal 20 %, bevorzugt maximal 10 % und 50 % der Partikel eine Abweichung von maximal 10 %, bevorzugt maximal 5 % von der gewichtsmittleren Partikelgröße aufweisen, gefunden, wobei man die Randfraktion von Polyolefin-Schaumpartikeln (I) mit einer mittleren Schüttdichte im Bereich von 10 bis 200 g/l, bevorzugt 20 bis 100 g/I und einer gewichtsmittleren Partikelgröße im Bereich von 1 bis 8 mm mit einer Verteilungsbreite, bei der 20 % der Partikel eine Abweichung von mindestens 10 % von der mittleren Schüttdichte aufweisen, aussiebt.

Bevorzugt werden für das Verfahren Siebe verwendet, die ein Aussieben von Fraktionen mit einer mittleren Schüttdichte der Polyolefin-Schaumpartikel (II) im Bereich von 90 bis 250 g/l, besonders bevorzugt im Bereich von 110 bis 180 g/l ermöglichen.

Die Bestimmung der Partikelgröße und der Partikelgrößenverteilung kann durch eine Siebanalyse erfolgen. Hierbei werden Siebe unterschiedlicher Größe verwendet und der Gewichtsanteil der einzelnen Siebfraktionen bestimmt und graphisch ausgewertet.

Als Polyolefine können Polyethylene (PE-LLD,LD,MD, HD), Homopolypropylen, Polypropylen-ethylen-Copolymere oder Mischungen davon eingesetzt werden. Bevorzugt werden Polypropylene, insbesondere Polypropylen-Ethylen-Randomcopolymere mit 1 bis 5 Gew.-% Ethylen eingesetzt.

Geeignet sind sowohl mit Ziegler- als auch mit Metallocen-Katalysatoren hergestellte Olefinpolymerisate.

Der Kristallitschmelzpunkt (DSC-Maximum) der Polyolefine liegt im allgemeinen zwischen 90 und 170°C. Ihre Schmelzwärme, bestimmt nach der DSC-Methode, liegt vorzugsweise zwischen 20 und 300 J/g, der Schmelzindex MFI (230°C, 2,16 kp für Propylenpolymerisate und 190°C, 2,16 kp für Ethylenpolymerisate) nach DIN 53 735 zwischen 0,1 und 100 g/10 min.

Bevorzugte Polyolefine sind Homo- oder Copolymere des Propylens mit bis zu 15 Gew.-% Ethylen und/oder Buten-1, besonders bevorzugt sind Propylen/Ethylen-Copolymere mit 1 bis 5 Gew.-% Ethylen. Sie besitzen eine Schmelztemperatur von 130 bis 160°C, und eine Dichte (bei Raumtemperatur) von etwa 900 g/l.

Das Olefinpolymerisat kann mit bis zu 50 % seines Gewichts eines andersartigen Thermoplast mit einer Glastemperatur (DSC-Wendepunkt) unterhalb von 180°C abgemischt sein. Geeignete Thermoplasten sind z.B. Polyamide in Mengen von 5 bis 40 Gew.-%, wobei der Mischung übliche Phasenvermittler, z.B. Blockcopolymerisate, wie Exxelor P 1015 (Fa. EXXON), zugesetzt werden können.

Es hat sich gezeigt, dass die Erfindung auch ohne Zumischen eines artfremden Thermoplasten durchführbar ist. Dies ist insofern bevorzugt, als durch einen Fremdthermoplasten die Recyclierbarkeit des Polyolefins bzw. des daraus hergestellten Schaumstoffs leidet. Kautschukartige Ethylen-/Propylen-Copolymerisate, die zur Elastifizierung zugesetzt werden können, sind in diesem Sinne nicht artfremd.

Das Polyolefin kann die üblichen Zusatzstoffe enthalten, wie Antioxidantien, Stabilisatoren, Flammschutzmittel, Wachse, Nucleierungsmittel, Füllstoffe, Pigmente und Farbstoffe.

Die Polyolefin-Schaumpartikel (I) vor dem Aussieben können durch kontinuierliche oder diskontinuierliche Imprägnierung in Druckkesseln oder Extrudern und anschlie-ßendem Entspannen hergestellt werden. Bevorzugt werden die Polyolefin-Schaumpartikel (I) durch Imprägnieren von Polyolefin-Granulat mit einem Treibmittlel in wässriger Suspension unter Druck und anschließendem Entspannen hergestellt.

Zur Herstellung der expandierbaren Polyolefinpartikel geht man aus von Polyolefingranulat, welches vorzugsweise mittlere Durchmesser von 0,2 bis 10, insbesondere von 0,5 bis 5 mm aufweist. Dieses meist zylinderförmige oder runde Minigranulat wird hergestellt durch Extrudieren des Polyolefins, gegebenenfalls zusammen mit dem zuzumischenden Thermoplasten und weiteren Zusatzstoffen, Auspressen aus dem Extruder, gegebenenfalls Abkühlen und Granulieren.

Das Minigranulat sollte vorzugsweise 0,001 bis 10, vorzugsweise 0,1 bis 5 und insbesondere 0,5 bis 3 Gew.-% eines Nucleierungsmittels enthalten. Geeignet sind z.B. Talkum, Paraffine und/oder Wachse sowie Ruß, Graphit und pyrogene Kieselsäuren, ferner natürliche oder synthetische Zeolithe und (ggf. modifizierte) Bentonite. Sie bewirken, dass ein feinzelliger Schaum entsteht, in manchen Fällen ermöglichen sie überhaupt erst das Schäumen.

Dieses Granulat wird in einem Rührreaktor in Wasser dispergiert. Dabei müssen Suspensionshilfsmittel zugesetzt werden, um eine gleichmäßige Verteilung des Minigranulats im Suspensionsmedium zu gewährleisten. Geeignete Suspensionshilfsmittel sind wasserunlösliche anorganische Stabilisatoren, wie Tricalciumphosphat, Magnesiumpyrophosphat, Metallcarbonate; ferner Polyvinylalkohol und Tenside, wie Natriumdodecylarylsulfonat. Sie werden üblicherweise in Mengen von 0,05 bis 10 Gew.-% eingesetzt.

Wesentlich ist die richtige Wahl des Treibmittels. Sein Siedepunkt bei Normaldruck sollte zwischen -25 und 150°C, insbesondere zwischen -10 und 125°C liegen. Das Treibmittel ist vorzugsweise ein Alkan, wie Butan, Pentane, Hexane und Heptane, ein Alkanol, wie Methanol, Ethanol, n-Propanol, isopropanol und n-Butanol, ein Keton, wie 3,3-Dimethyl-2-butanon und 4-Methyl-2-pentanon, ein Ether , Ester oder Stickstoff, Luft oder Kohlendioxid. Auch Treibmittelmischungen können eingesetzt werden. Besonders bevorzugt wird Butan und CO₂ eingesetzt.

Das Treibmittel wird in Mengen von vorzugsweise 1 bis 20 Gew.-%, insbesondere 2 bis 15 Gew.-%, bezogen auf das Granulat, eingesetzt. Die Treibmittelzugabe kann dabei vor, während oder nach dem Aufheizen des Reaktorinhalts erfolgen. Es kann auf einmal oder in Teilportionen zugeführt werden.

Beim Imprägnieren sollte die Temperatur in der Nähe der Erweichungstemperatur des Polyolefins liegen. Sie kann 40°C unter bis 25°C über der Schmelztemperatur (Kristallitschmelzpunkt) liegen. Bei Polypropylen sind Imprägniertemperaturen zwischen 120°C und 170°C bevorzugt.

Je nach Menge und Art des Treibmittels sowie nach der Höhe der Temperatur stellt sich im Reaktor ein Druck ein, der im allgemeinen höher als 2 bar ist und 40 bar nicht übersteigt.

Die Imprägnierzeiten liegen im allgemeinen zwischen 30 und 180 Minuten. Nach dem Entspannen und dem Ablassen aus dem Reaktor werden die treibmittelhaltigen Partikel vom Suspensionsmedium abgetrennt und gewaschen.

Durch die Wahl der Imprägniertemperatur und des Treibmittels kann die Schüttdichte der entstandenen Polyolefin-Schaumpartikel gesteuert werden. Nach Erreichen der Entspannungstemperatur wird der Reaktor entspannt, wobei die Entspannung zweckmäßigerweise in einen Zwischenbehälter erfolgt, in dem ein Druck von vorzugsweise 0,5 bis 5 bar herrscht.

Beim Entspannen des Reaktors erfolgt eine Expansion des treibmittelhaltigen Polyolefin-Granulats und es entstehen Polyolefin-Schaumpartikel mit einem mittleren Durchmesser von 1 bis 20 mm, welche überwiegend geschlossenzellig sind und eine Zellzahl von 1 bis 5000 Zellen/mm², vorzugsweise 2 bis 3000 Zellen/mm², insbesondere 10 bis 1500 Zellen/mm² besitzen.

Die Polyolefin-Schaumpartikel können nach üblichen Verfahren mit Wasserdampf oder Heißluft zu Schaumstoff-Formteilen verschweißt werden, welche in der Automobil-, Verpackungs- und Freizeitindustrie Anwendung finden.

Die erfindungsgemäßen Polyolefin-Schaumpartikel (II) nach dem Aussieben können in einem kontinuierlichen oder diskontinuierlichen Druckschäumer bei einer Temperatur im Bereich von 110 bis 170°C auf zu Polyolefin-Schaumpartikel (III) mit einer mittleren Schüttdichte im Bereich von 10 bis 100 g/l verschäumt werden.

### Beispiele:

Aus Polypropylen-Schaumpartikeln (I) (EPP Neopolen® P der BASF Aktiengesellschaft) mit einer mittleren Schüttdichte von 64,4 g/l wurde eine Fraktion mit einer mittleren Schüttdichte von 92 g/l ausgesiebt (Polypropylen-Schaumpartikel (II)) und anschließend im Druckschäumer bei 120°C zu Polypropylen-Schaumpartikeln (III) mit einer mittleren Schüttdichte von 80 g/I verschäumt. Hierzu wurden die Schaumpartikel (II) bei 3,6 bar 12 Stunden im Drucktank gelagert und dann im Druckschäumer bei 1,5 bar Dampf 10 Sekunden nachgeschäumt.

**Tabelle 1: Siebanalyse der Polypropylen-Schaumpartikel (I)**

| Siebgröße [mm] | Masseanteil der Siebfraktion [%] | Kumulierter Anteil [%] |
|---|---|---|
| 4,00 | 0,00 | 100,00 |
| 3,55 | 0,16 | 99,84 |
| 3,15 | 2,83 | 97,02 |
| 2,80 | 52,5 | 44,52 |
| 2,50 | 22,04 | 22,48 |
| 2,24 | 11,49 | 10,99 |
| 2,00 | 5,25 | 5,74 |
| 1,70 | 4,13 | 1,61 |
| 1,40 | 1,58 | 0,03 |
| Boden | 0,03 | 0,00 |

**Tabelle 2: Siebanalyse der Polypropylen-Schaumpartikel (II)**

| Siebgröße [mm] | Masseanteil der Siebfraktion [%] | Kumulierter Anteil [%] |
|---|---|---|
| 4,00 | 0,02 | 100,00 |
| 3,55 | 0,00 | 100,00 |
| 3,15 | 0,11 | 99,89 |
| 2,80 | 1,88 | 98,01 |
| 2,50 | 5,21 | 92,80 |
| 2,24 | 60,57 | 32,23 |
| 2,00 | 31,20 | 1,03 |
| 1,70 | 1,03 | 0,00 |
| 1,40 | 0,00 | 0,00 |
| Boden | 0,00 | 0,00 |

## Patentansprüche

1. Verfahren zur Herstellung von Polyolefin-Schaumpartikeln (II) mit einer mittleren Schüttdichte im Bereich von 70 bis 300 g/l und einer gewichtsmittleren Partikelgröße im Bereich von 1 bis 5 mm mit einer Verteilungsbreite bei der 90 % der Partikel eine Abweichung von maximal 20 % und 50% der Partikel eine Abweichung von maximal 10 % von der gewichtmittleren Partikelgröße aufweisen, **dadurch gekennzeichnet, dass** man die Randfraktion von Polyolefin-Schaumpartikeln (I) mit einer mittleren Schüttdichte im Bereich von 10 bis 200 g/l und einer gewichtsmittleren Partikelgröße im Bereich von 1 bis 8 mm mit einer Verteilungsbreite, bei der 20 % der Partikel eine Abweichung von mindestens 10 % von der gewichtsmittleren Partikelgröße aufweisen, aussiebt.

2. Verfahren nach Anspruch 1, **dadurch gekennzeichnet, dass** die mittlere Schüttdichte der Polyolefin-Schaumpartikel (II) nach dem Aussieben im Bereich von 90 bis 250 g/l liegt.

3. Verfahren nach Anspruch 1, **dadurch gekennzeichnet, dass** die mittlere Schüttdichte der Polyolefin-Schaumpartikel (II) nach dem Aussieben im Bereich von 110 bis 180 g/l liegt.

4. Verfahren nach einem der Ansprüche 1 bis 3, **dadurch gekennzeichnet, dass** als Polyolefin ein Polypropylen eingesetzt wird.

5. Verfahren nach Anspruch 4, **dadurch gekennzeichnet, dass** als Polyolefin ein Polypropylen-Ethylen-Copolymer mit 1 bis 5 Gew.-% Ethylen eingesetzt wird.

6. Verfahren nach einem der Ansprüche 1 bis 5, **dadurch gekennzeichnet, dass** die Polyolefin-Schaumpartikel (I) vor dem Aussieben durch Imprägnieren von Polyolefin-Granulat mit einem Treibmittel in wässriger Suspension unter Druck und anschließendem Entspannen hergestellt wurden.

7. Verfahren nach einem der Ansprüche 1 bis 6, **dadurch gekennzeichnet, dass** als Treibmittel Butan oder Kohlendioxid verwendet wird.

8. Verfahren nach einem der Ansprüche 1 bis 7, **dadurch gekennzeichnet, dass** man die Polyolefin-Schaumpartikel (II) nach dem Aussieben in einem kontinuierlichen oder diskontinuierlichen Druckschäumer bei einer Temperatur im Bereich von 110 bis 170°C auf zu Polyolefin-Schaumpartikeln (III) mit einer mittleren Schüttdichte im Bereich von 10 bis 100 g/l verschäumt.

## Claims

1. A process for production of polyolefin foam beads (II) with an average bulk density in the range from 70 to 300 g/l and with a weight-average particle size in the range from 1 to 5 mm, with a distribution breadth in which 90% of the particles have a deviation of at most 20% and 50% of the particles have a deviation of at most 10% from the weight-average particle size, which comprises sieve-extraction of the marginal fraction of polyolefin foam beads (I) with an average bulk density in the range from 10 to 200 g/l and with a weight-average particle size in the range from 1 to 8 mm, with a distribution breadth in which 20% of the particles have a deviation of at least 10% from the weight-average particle size.

2. The process according to claim 1, wherein the average bulk density of the polyolefin foam beads (II) after the sieve-extraction process is in the range from 90 to 250 g/l.

3. The process according to claim 1, wherein the average bulk density of the polyolefin foam beads (II) after the sieve-extraction process is in the range from 110 to 180 g/l.

4. The process according to any of claims 1 to 3, wherein a polypropylene is used as polyolefin.

5. The process according to claim 4, wherein a polypropylene-ethylene copolymer having from 1 to 5% by weight of ethylene is used as polyolefin.

6. The process according to any of claims 1 to 5, wherein, prior to the sieve-extraction process, the polyolefin foam beads (I) were prepared via impregnation of polyolefin pellets with a blowing agent in aqueous suspension under pressure and subsequent depressurization.

7. The process according to any of claims 1 to 6, wherein butane or carbon dioxide is used as blowing agent.

8. The process according to any of claims 1 to 7, wherein, after the the sieve-extraction process, the polyolefin foam beads (II) are foamed in a continuous or batch pressure foamer at a temperature in the range from 110 to 170 °C to give polyolefin foam beads (III) with an average bulk density in the range from 10 to 100 g/l.

## Revendications

1. Procédé de fabrication de particules de mousse de polyoléfine (II) d'une densité apparente moyenne dans la plage allant de 70 à 300 g/l et d'une taille de particule moyenne en poids dans la plage allant de 1 à 5 mm, avec une plage de distribution telle que 90 % des particules présentent une différence d'au maximum 20 % et 50 % des particules présentent une différence d'au maximum 10 % par rapport à la taille de particule moyenne en poids, **caractérisé en ce que** la fraction marginale de particules de mousse de polyoléfine (II) d'une densité apparente moyenne dans la plage allant de 10 à 200 g/l et d'une taille de particule moyenne en poids dans la plage allant de 1 à 8 mm, avec une plage de distribution telle que 20 % des particules présentent une différence d'au moins 10 % par rapport à la taille de particule moyenne en poids, est tamisée.

2. Procédé selon la revendication 1, **caractérisé en ce que** la densité apparente moyenne des particules de mousse de polyoléfine (II) après le tamisage est dans la plage allant de 90 à 250 g/l.

3. Procédé selon la revendication 1, **caractérisé en ce que** la densité apparente moyenne des particules de mousse de polyoléfine (II) après le tamisage est dans la plage allant de 110 à 180 g/l.

4. Procédé selon l'une quelconque des revendications 1 à 3, **caractérisé en ce qu'**un polypropylène est utilisé en tant que polyoléfine.

5. Procédé selon la revendication 4, **caractérisé en ce qu'**un copolymère polypropylène-éthylène contenant 1 à 5 % en poids d'éthylène est utilisé en tant que polyoléfine.

6. Procédé selon l'une quelconque des revendications 1 à 5, **caractérisé en ce que** les particules de mousse de polyoléfine (I) avant le tamisage sont fabriquées par imprégnation d'un granulat de polyoléfine avec un agent gonflant dans une suspension aqueuse sous pression et détente ultérieure.

7. Procédé selon l'une quelconque des revendications 1 à 6, **caractérisé en ce que** du butane ou du dioxyde de carbone est utilisé en tant qu'agent gonflant.

8. Procédé selon l'une quelconque des revendications 1 à 7, **caractérisé en ce que** les particules de mousse de polyoléfine (II) sont expansées après le tamisage dans un dispositif de moussage sous pression continu ou discontinu à une température dans la plage allant de 110 à 170 °C pour former des particules de mousse de polyoléfine (III) d'une densité apparente moyenne dans la plage allant de 10 à 100 g/l.
